# EUROPÄISCHE PATENTSCHRIFT

(11) **EP 0 703 709 B1**
(45) Veröffentlichungstag und Bekanntmachung des Hinweises auf die Patenterteilung: **01.03.2000**
(21) Anmeldenummer: 95114394.0
(22) Anmeldetag: 13.09.1995
(51) Int. Cl.: H04N 7/173

(54) **Breitbandinformationssystem für interaktive Dienste**
Broadband information system for interactive services
Système d'information à large bande pour des services interactifs

(30) Priorität: 22.09.1994 DE 4433898
(43) Veröffentlichungstag der Anmeldung: 27.03.1996
(73) Patentinhaber: SIEMENS AKTIENGESELLSCHAFT, 80333 München (DE)
(72) Erfinder: Stein, Karl-Ulrich, Dr.-Ing., D-82008 Unterhaching (DE)

(56) Entgegenhaltungen:
- EP-A- 0 333 466
- EP-A- 0 594 351
- WO-A-90/13026
- DE-A- 3 230 825
- PROCEEDINGS OF THE INTERNATIONAL CONFERENCE ON COMMUNICATIONS (ICC), GENEVA, MAY 23 - 26, 1993, Bd. 1 - 2 - 03, 23.Mai 1993, INSTITUTE OF ELECTRICAL AND ELECTRONICS ENGINEERS, Seiten 848-852, XP000371202 GELMAN A D ET AL: "AN ARCHITECTURE FOR INTERACTIVE APPLICATIONS"
- CATV SESSIONS, MONTREUX, JUNE 17 - 22, 1989, Nr. SYMP. 16, 17.Juni 1989, CCETT, Seiten 411-414, XP000094316 DUTERTRE Y ET AL: "CHARACTERIZATION AND POSSIBLE USES OF THE RETURN CHANNEL ON SUB-SPLIT COAXIAL DISTRIBUTION NETWORKS"
- MICROPROCESSING AND MICROPROGRAMMING, Bd. 40, Nr. 5, 1.Juni 1994, Seiten 355-373, XP000453376 KARSHMER A I ET AL: "ON IMPLEMENTING COMPUTER NETWORKING ON EXISTING CABLE TV PLANTS: SOME INTERESTING PROPOSALS"

## Beschreibung

Die Erfindung betrifft ein Breitbandinformationssystem für Dienste nach dem Oberbegriff des Anspruchs 1.

Aus dem Anlageband 5 "Kabelfernsehen" zum Kommunikationsbericht des Bundesministeriums für das Post- und Fernmeldewesen, Verlag Dr. Heinz Jäger, Goethestr. 56, Bonn - Bad Godesberg 1, Seite 106 bis Seite 139 sind Kabelfernsehanlagen mit Rückkanal beschrieben. Die damals vorgesehenen Kabel sind in moderneren Konzepten durch Lichtwellenleiter ersetzt. Anstelle von analogen Fernsehsignalen werden jetzt digitalisierte Fernsehsignale bis zu optischen Anschlußeinheiten (Optical-Network-Unit - ONU) übertragen. Diese setzen die optischen Signale in modulierte elektrische Signale um, die über Baumstrukturen aufweisende Koaxialverbindungen zu Teilnehmer-Anschlußeinheiten (Network Termination - NT) geführt werden, an die Endgeräte der Teilnehmer angeschaltet.

In der Patentschrift DE 32 07 022 ist ein Informationsabrufsystem beschrieben, bei dem die benötigten Rückkanäle in einem schmalbandigen Dialognetz realisiert werden. In einer weiteren Variante sind die Teilnehmer direkt über Lichtwellenleiter angeschlossen, die auch zur Übertragung von Daten des schmalbandigen Steuerkanals dienen.

Diese Variante erfordert jedoch eine Neugestaltung des gesamten Netzes bis hin zum Teilnehmer.

Aufgabe der Erfindung ist es ein kostengünstiges Breitbandinformationssystem anzugeben.

Diese Aufgabe wird durch das Breitbandinformationsystem nach Anspruch 1 gelöst.

Vorteilhafte Weiterbildungen der Erfindung sind in den Unteransprüchen angegeben.

Der besondere Vorteil der Erfindung besteht darin, daß vorhandene mit Koaxialkabeln ausgeführte Hausnetze für interaktive Dienste, insbesondere für Fernsehabrufsysteme (Video on Demand - VOD), genutzt werden können. An eine Teilnehmer-Anschlußeinheit können mehrere Fernsehteilnehmer bzw. Fernsehteilnehmergruppen angeschaltet werden. Darüber hinaus können die Teilnehmer-Anschlußeinheit noch weitere Anschlüsse, beispielsweise für ISDN-Verbindungen und Personalcomputer aufweisen.

Eine Teilnehmer-Anschlußeinheit bildet die Trennstelle zwischen dem lokalen Netz des Teilnehmers (der Teilnehmer) und dem öffentlichen Netz. Durch diese Trennung können Betriebsstörungen des öffentlichen Netzes weitgehend vermieden werden, da Eingriffe erschwert werden.

Vorteilhaft ist die Übertragung von Steuersignalen im Basisband. Hierbei kann eine Umcodierung in einen gleichstromfreien Code, beispielsweise in den CMI-Code, erfolgen. Falls erforderlich, werden die Abzweiger ausgetauscht oder bidirektionale Verstärker eingebaut.

Sollten Probleme mit den Verzweigern auftreten, kann auch eine einfache Modulation wie AM, FM oder On-Off für den Rückkanal verwendet werden.

Ein Ausführungsbeispiel der Erfindung wird anhand eines Prinzipschaltbildes näher erläutert.

An ein mit Lichtwellenleitern LWL aufgebautes Breitbandnetz BB sind als Schnittstellen zu einem mit Koaxkabeln KK aufgebauten öffentlichen Baumnetz BN optische Anschlußeinheiten ONU (Optical Network Unit) vorgesehen. An das Baumnetz sind mehrere Teilnehmer-Anschlußeinheiten NT (Network Termination) angeschlossen, die wiederum die Schnittstelle zu Teilnehmernetzen TN bilden (es ist jeweils nur eine Einheit dargestellt). Die Teilnehmer-Anschlußeinheiten werden beispielsweise anstelle der Übergabepunkte des Kabelfernsehens im Kellerraum eines Hauses installiert. Eine Teilnehmer-Anschlußeinheit kann mehrere Anschlüsse AN aufweisen. An einen ersten Anschluß AN1 ist ein Koaxialkabel KK angeschaltet, an das über Verzweiger VZ Fernsehempfangsgeräte von Teilnehmern TL1, TL2, ... angeschlossen sind. Außerdem, doch dies gehört nicht zur vorliegenden Erfindung, können weitere Anschlüsse vorgesehen sein, beispielsweise ISDN - Anschlüsse, übliche Telefonanschlüsse oder Anschlüsse für Personalcomputers usw.

Damit die Teilnehmer mit einer an das Breitbandnetz angeschalteten Sendezentrale SZ Verbindung aufnehmen können, müssen sie die entsprechenden Verbindungseinrichtungen besitzen, beispielsweise ein VOD-Terminal VODE, über das Steuersignale zur Sendezentrale geschickt werden können. Beim Teilnehmer 2 ist das VOD-Terminal bereits im Fernsehempfänger integriert.

Die Fernsehprogramme werden von der Sendezentrale SZ digitalisiert und direkt in das Breitbandnetz BN eingespeist oder zunächst ausgestrahlt und dann über eine Empfangsanlage ebenfalls in das Breitbandnetz digitalisiert eingespeist. Über Lichtwellenleiter des Breitbandnetzes BB werden die digitalisierten Fernsehsignale bis zu optischen Anschlußeinheiten ONU übertragen. Hier werden sie in analoge Fersehsignale umgesetzt, in das öffentliche Baumnetz BN eingespeist und gelangen zunächst zu Teilnehmer-Anschlußeinheiten NT. Hier werden sie - in der Regel durch aktive Anschlußeinheiten entkoppelt - in das ebenfalls mit Koaxialkabeln KK aufgebaute Teilnehmernetz eingespeist. Durch Wahl des richtigen Fernsehkanals (des richtigen Frequenzbandes) empfängt der Teilnehmer das gewünschte Programm.

Für den Fernsehprogramm-Abrufbetrieb (VOB) ist ein Rückkanal erforderlich, der im Frequenzband unterhalb der Fernsehprogamme realisiert ist. Steuersignale SG können vom Teilnehmer beispielsweise über eine Fernbedienung und ein VOD-Terminal VODE in das Teilnehmernetz TN eingespeist werden.

Die Steuersignale werden im Basisband übertragen; sie sollten jedoch umcodiert werden, um Probleme bei den Verzweigern zu vermeiden. Im einfachsten Fall können die Steuersignale asynchron zur Anschlußeinheit übertragen werden, da die Wahrscheinlichkeit, das mehrere Teilnehmer gleichzeitig einen Steuersignale aussenden, zumindest bei kleinen Hausnetzen gering ist. Durch das zuerst gegebene Steuersignal wird die Aussendung weiterer Steuersignale von anderen Teilnehmern unterbunden.

Sollen auch mehrere Teilnehmer gleichzeitig Steuersignale aussenden können, so kann eins der üblichen Zeitmultiplexsysteme, z.B. ein Polling-System mit zyklischer Abfrage aller Teilnehmer für die Organisation der Rückkanäle verwendet werden.

Die Steuersignale können in der Teilnehmer-Anschlußeinheit NT umgesetzt werden, beispielsweise mit einer Kennung der Teilnehmer-Anschlußeinheit NT versehen werden. Dann werden sie beispielsweise im ATM-Modus über das Baumnetz BN, die optische Anschlußeinheit ONU und das Breitbandnetz BB zur Sendezentrale SZ bzw. einer entsprechenden Kopfstation übertragen.

Neben dem Rückkanal kann auch ein schmalbandiger Steuerkanal von der Zentrale zu den Teilnehmern vorgesehen ein, über den beispielsweise die Kanalauswahl gesteuert wird.

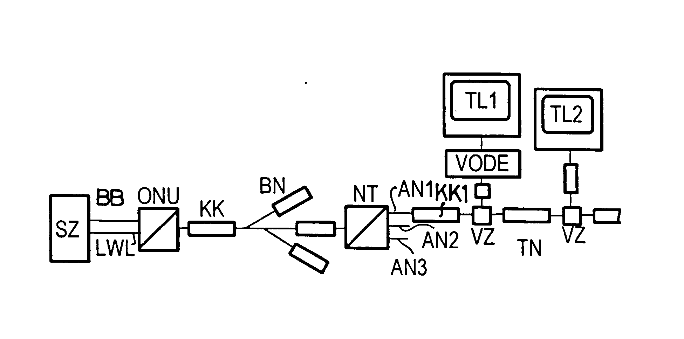

## Patentansprüche

1. Breitbandinformationssystem für interaktive Dienste mit zumindest einem digitalen Netz, das durch zumindest eine Teilnehmer-Anschlußeinheit (NT) abgeschlossen ist und an das eine Sendezentrale (SZ) angeschlossen ist, wobei an die zumindest eine Teilnehmer-Anschlußeinheit (NT) Teilnehmer (TL1, TL2, ...) über Koaxialkabel (KK1) angeschlossen sind,
**dadurch gekennzeichnet,**
- daß Steuersignale (SG) der Teilnehmer (T1, T2,...) an die Sendezentrale (SZ) über das Koaxialkabel (KK1) zur Teilnehmer-Anschlußeinheit (NT) übertragen werden, und
- daß die Teilnehmer-Anschlußeinheit (NT) die Steuersignale (SG) in Steuerkanäle des digitalen Netzes einfügt.

2. Breitbandinformationssystem nach Anspruch 1,
**dadurch gekennzeichnet,**
daß die Teilnehmer (TL1, TL2, ...) über ein als Baumnetz (BN), Sternnetz oder ein kombiniertes Stern-Baumnetz ausgebildetes Teilnehmernetz (TN) an die Teilnehmer-Anschlußeinheit (NT) angeschaltet sind.

3. Breitbandinformationssystem nach einem der vorhergehenden Ansprüche,
**dadurch gekennzeichnet,**
daß binäre Steuersignale (SG) im Basisband übertragen werden.

4. Breitbandinformationssystem nach einem der vorhergehenden Ansprüche,
**dadurch gekennzeichnet,**
daß die Steuersignale (SG) in einem gleichstromfreien Code übertragen werden.

5. Breitbandinformationssystem nach einem der vorhergehenden Ansprüche,
**dadurch gekennzeichnet,**
daß die Steuersignale (SG) der Teilnehmer im Zeitmultiplexverfahren übertragen werden.

6. Breitbandinformationssystem nach einem der vorhergehenden Ansprüche,
**dadurch gekennzeichnet,**
daß die Steuersignale (SG) asynchron übertragen werden und die nicht sendenden Stationen durch ein Steuersignal (SG) blockiert werden.

7. Breitbandinformationssystem nach einem der vorhergehenden Ansprüche,
**dadurch gekennzeichnet,**
daß die Steuersignale (SG) in der Teilnehmer-Anschlußeinheit (NT) in virtuelle Datenkanäle des Baumnetzes (BN) eingefügt werden.

8. Breitbandinformationssystem nach Anspruch 7,
**dadurch gekennzeichnet,**
daß die Übertragung der Steuersignale (SG) zur Sendezentrale (SZ) über ATM-Verbindungen erfolgt.

9. Breitbandinformationssystem nach Anspruch 5,
**dadurch gekennzeichnet,**
daß die Steuersignale (SG) über ein Baumnetz (BN) zur optischen Anschlußeinheit (ONU) übertragen werden.

## Claims

1. Broadband information system for interactive services having at least one digital network which is terminated by at least one subscriber line unit (NT) and to which a transmission centre (SZ) is connected, subscribers (TL1, TL2, ...) being connected to the at least one subscriber line unit (NT) via coaxial cables (KK1), characterized
- in that control signals (SG) of the subscribers (T1, T2, ...) are transmitted to the transmission centre (SZ) via the coaxial cable (KK1) to the subscriber line unit (NT), and
- in that the subscriber line unit (NT) inserts the control signals (SG) into control channels of the digital network.

2. Broadband information system according to Claim 1, characterized in that the subscribers (TL1, TL2, ...) are connected to the subscriber line unit (NT) by means of a subscriber network (TN) which is embodied as a tree network (BN), star network or a combined star/tree network.

3. Broadband information system according to one of the preceding claims, characterized in that binary control signals (SG) are transmitted in the baseband.

4. Broadband information system according to one of the preceding claims, characterized in that the control signals (SG) are transmitted in a DC-free code.

5. Broadband information system according to one of the preceding claims, characterized in that the control signals (SG) of the subscribers are transmitted using the time-division multiplex method.

6. Broadband information system according to one of the preceding claims, characterized in that the control signals (SG) are transmitted asynchronously and the non-transmitting stations are blocked by means of a control signal (SG).

7. Broadband information system according to one of the preceding claims, characterized in that the control signals (SG) are inserted into virtual data channels of the tree network (BN) in the subscriber line unit (NT).

8. Broadband information system according to Claim 7, characterized in that the control signals (SG) are transmitted to the transmission centre (SZ) on ATM links.

9. Broadband information system according to Claim 5, characterized in that the control signals (SG) are transmitted to the optical line unit (ONU) by means of a tree network (BN).

## Revendications

1. Système d'information à large bande pour services interactifs avec au moins un réseau numérique, qui se termine par au moins une unité de raccordement d'abonné (NT) et sur lequel est raccordée une centrale de diffusion (SZ), des usagers (TL1, TL2, ...) étant raccordés par l'intermédiaire de câbles coaxiaux (KK1) sur l'unité de raccordement d'abonné (NT),
**caractérisé par le fait**
- que les signaux de commande (SG) des usagers (T1, T2, ...) à la centrale de diffusion (SZ) sont transmis vers l'unité de raccordement d'abonné (NT) à travers le câble coaxial (KK1) et
- que l'unité de raccordement d'abonné (NT) injecte les signaux de commande (SG) dans des canaux de commande du réseau numérique.

2. Système d'information à large bande selon la revendication 1
**caractérisé par le fait**
que les usagers (TL1, TL2, ...) sont raccordés à l'unité de raccordement d'abonné (NT) par l'intermédiaire d'un réseau d'usagers (TN) sous forme de réseau ramifié (BN), de réseau en étoile ou de réseau combiné ramifié-étoile.

3. Système d'information à large bande selon l'une des revendications précédentes
**caractérisé par le fait**
que des signaux de commande binaires (SG) sont transmis dans la bande de base.

4. Système d'information à large bande selon l'une des revendications précédentes
**caractérisé par le fait**
que les signaux de commande (SG) sont transmis suivant un code sans courant continu.

5. Système d'information à large bande selon l'une des revendications précédentes
**caractérisé par le fait**
que les signaux de commande (SG) des usagers sont transmis suivant un procédé de multiplexage dans le temps.

6. Système d'information à large bande selon l'une des revendications précédentes
**caractérisé par le fait**
que les signaux de commande (SG) sont transmis d'une façon asynchrone et que les stations qui n'émettent pas sont bloquées par un signal de commande (SG).

7. Système d'information à large bande selon l'une des revendications précédentes
**caractérisé par le fait**
que les signaux de commande (SG) sont insérés, dans l'unité de raccordement d'abonné (NT), dans des canaux virtuels de données du réseau ramifié (BN).

8. Système d'information à large bande selon la revendication 7
**caractérisé par le fait**
que la transmission des signaux de commande (SG) vers la centrale de diffusion (SZ) se fait à travers des liaisons ATM ou à mode de transmission asynchrone.

9. Système d'information à large bande selon la revendication 5
**caractérisé par le fait**
que les signaux de commande (SG) sont transmis vers l'unité optique de raccordement (ONU) à travers un réseau ramifié (BN).
